# EUROPEAN PATENT APPLICATION

(11) **EP 4 215 275 A1**
(43) Date of publication of application: **26.07.2023**
(21) Application number: 22213886.9
(22) Date of filing: 15.12.2022
(51) Int. Cl.: B01J 49/75, C02F 1/42

(54) **WATER SOFTENER FOR A PLUMBING SYSTEM**

(30) Priority: 21.01.2022 IT 202200000242 U
(71) Applicant: ACQUA BREVETTI S.R.L., 35035 Mestrino (PD) (IT)
(72) Inventor: BARBIERI, Graziano, 35035 MESTRINO PD (IT)
(74) Representative: Modiano, Micaela Nadia

(57) **Abstract**

A water softener (10) for a plumbing system, comprising a container (11) open in an upper region, with respect to the position of use of the water softener, and inside which there is an ion exchange cylinder (12) that can be affected by an inlet duct (13) for the water to be softened and an outlet duct (14) for the softened water. In the volume of the container (11) there is a vat (15) for the containment of brine, in controlled fluidic connection with the cylinder (12); the softener (10) also includes a hopper-like body (20) installed on the container (11) so as to cover its opening and adapted to convey salt for the brine into the vat (15).

## Description

The present invention relates to a water softener for a plumbing system.

The invention is in the field of devices for water treatment in plumbing systems.

Sometimes water from an aqueduct or from self-supply can have high values of hardness, a term used to indicate the concentration of calcium and magnesium salts. Therefore, plumbing systems for heating and sanitary water supply are subject to the danger of scaling and corrosion due to the presence of said salts, which by precipitating form scale deposits. Such scale causes damage to boilers, kettles, system and electrical appliances in general that require water from aqueducts for their operation.

For this reason, it has become by now customary to introduce in plumbing circuits substances adapted to obtain the suspension of calcium and magnesium salts and/or softeners that promote the removal of the ions that cause water to be hard.

As is known, a softener is basically an exchanger of specific ions, intended to remove, for example, calcium and magnesium ions and replace them with other ions, for example, sodium and potassium.

The softener includes a container into which water enters from one side and softened water exits from the other side. A resin is present in the container as ion exchange material. The resin has a negative charge, while the calcium and magnesium ions, dissolved in the water, instead have a positive charge. The flow of water of the system passes through the softener, and as the water passes through, the resin attracts, and becomes charged with, the calcium and magnesium ions that are present in the liquid, and releases in exchange the sodium ions. The resin, after a certain period of time, depletes the sodium, and therefore it must be regenerated periodically by treatment with brine. Said brine is contained in another container or in a larger container that in turn also contains the first one: the water of the brine passes to the first container, where the resin absorbs the sodium, thus restoring the sodium ions.

The brine also must be restored, and this occurs by loading the brine container with bags of salt, often weighing several dozen kilograms, which are not easy to handle. Because of the weight of the salt bags and the consequent difficulty in handling them, often not all the salt is poured properly into the container, with an inevitable waste of material and time.

The aim of the present invention is to provide a water softener that is capable of improving the background art in one or more of the above cited aspects.

Within this aim, an object of the invention is to provide a water softener that facilitates the operations for recharging the brine with salt.

Another object of the invention is to provide a water softener that allows to pour the salt into the brine container while minimizing waste.

A further object of the present invention is to provide a water softener that overcomes the drawbacks of the background art in a manner that is alternative to any existing solutions.

Not least object of the invention is to provide a water softener that is of high reliability, relatively easy to provide, and at competitive costs.

This aim, as well as these and other objects which will become better apparent hereinafter, are achieved by a water softener for a plumbing system, comprising a container open in an upper region, with respect to the position of use of the water softener, and inside which there is an ion exchange cylinder that can be affected by an inlet duct for the water to be softened and an outlet duct for the softened water, in the volume of said container there being a vat for the containment of brine, in controlled fluidic connection with said cylinder,
said water softener being characterized by comprising a hopper-like body installed on said container so as to cover its opening and adapted to convey salt for the brine into said vat.

Further characteristics and advantages of the invention will become better apparent from the description of a preferred but not exclusive embodiment of the water softener according to the invention, illustrated by way of non-limiting example in the accompanying drawings, wherein:

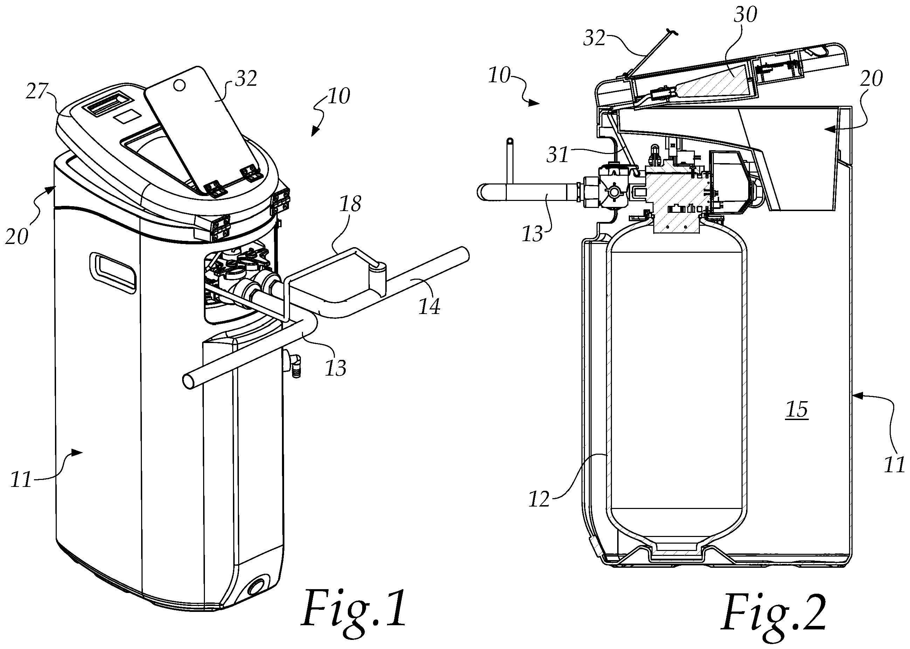

Figure 1 is a perspective view of the water softener according to the invention;
Figure 2 is a sectional view of the water softener according to the invention;

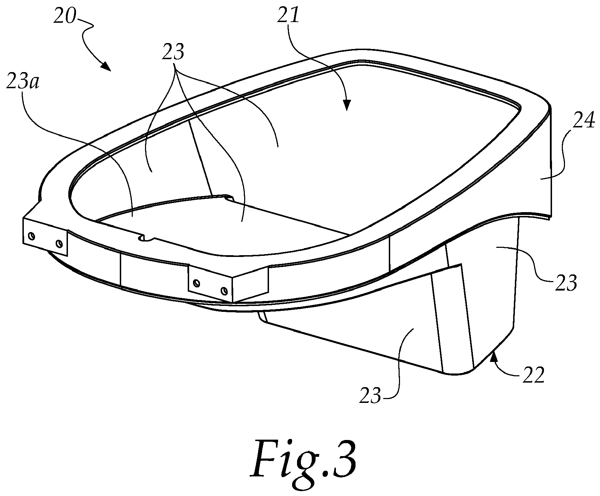

Figure 3 is a view of the hopper-like body of the water softener according to the invention;
Figure 4 is an exploded perspective view of the water softener according to the invention.

With reference to the figures, the water softener according to the invention, generally designated by the reference numeral 10, comprises a container 11 that is open in an upper region, relative to the position of use of the softener, and inside which there is an ion exchange cylinder 12 that can be affected by an inlet duct 13 for the water to be softened and by an outlet duct 14 for the softened water.

A vat 15 for brine containment, in controlled fluidic connection with cylinder 12, is formed in the volume of the container 11.

A dosage pump 16 is also present inside the container 11, is positioned above the cylinder 12 and is adapted to dose scale remover or disinfectant product to be injected into the plumbing system at the outlet of the softened water, then into the outlet duct 14, immediately downstream of a flow meter 17 via a connecting duct 18.

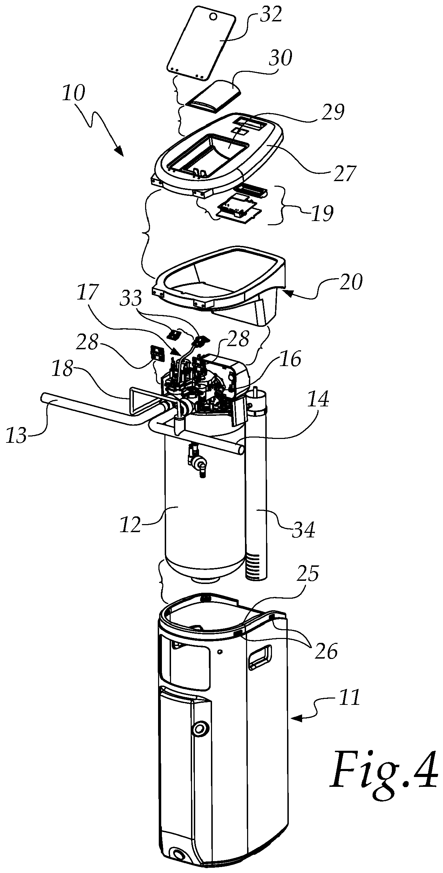

The dosage pump 16 is specifically preferably an electric volumetric pump, driven by an electric step motor with a variable flow rate that is proportional to the frequency of the pulses sent by a Hall effect sensor of the flow meter 17. Control is performed by an electronic assembly 19, with an electronic board, of the softener, which manages the functions of the dosage pump in proportion to the flow rate of water to be treated. The electronic assembly is shown in Figure 4.

The free volume of container 11, essentially the volume that surrounds the cylinder 12, forms the vat 15 in which brine is contained for the regeneration of a resin contained in the cylinder 12 for ion exchange.

The vat 15 and the cylinder 12 are appropriately connected in a per se known manner by means of a valve and brine suction tube 34.

The softener 10 has a particularity in that it includes a hopper-like body 20, which is installed on the container 11 so as to cover its opening and is adapted to convey salt for the brine into the vat 15.

The hopper-like body 20, which is shown individually in Figure 4, has top and bottom openings 21 and 22 and inclined walls 23 adapted to convey the salt into the vat 15, as a funnel would substantially do.

All of the walls 23 are inclined so as to produce a narrowing of the cross-section, from the top opening to the bottom opening, and one wall in particular, the wall designated by 23a, has a smaller inclination than the others, with respect to the horizontal plane, to provide space below it for the components installed above the cylinder 12.

The hopper-like body 20 is preferably made of plastic material and has a folded edge 24 for coupling to the upper edge 25 of the container 11 by virtue of quick coupling means.

In particular, the quick coupling means include raised portions that protrude from the folded edge 24 and are adapted to enter in a snap fashion adapted seats 26 provided at the upper edge 25. The folded edge 24 substantially straddles at least one part of the upper edge 25 and the fold has an extension that is shaped complementarily to that of the upper edge 25, since it has a frame-like upper edge that has a horizontal arrangement.

The softener conveniently includes a lid 27 adapted to fully cover the top opening 21, which is hinged to the folded edge 24 of the hopper-like body 20 by means of first hinges 28.

The lid 27 has a receptacle 29, open in an upper region, for a replaceable bag 30 of scale remover or disinfectant product appropriately connected by means of another duct 31 to the dosage pump 16.

The receptacle 29 can be closed by means of a door 32, hinged by means of second hinges 33.

The use of the water softener according to the invention is evident from what has been described and shown, and in particular it is evident that the particular shape of the hopper-like body and its installation above the opening of the container, and in particular of the vat, allow to facilitate the operations for filling the vat with salt for the brine, preventing the salt, conveyed more easily toward the inside of the container, from being able to fall outside said container.

In practice it has been found that the invention achieves the intended aim and objects, providing a water softener that facilitates the operations for recharging the brine with salt and minimizes their waste.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent dimensions and shapes, may be any according to the requirements and the state of the art.

The disclosures in Italian Utility Model Application No. 202022000000242 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A water softener (10) for a plumbing system, comprising a container (11) open in an upper region, with respect to the position of use of the water softener, and inside which there is an ion exchange cylinder (12) that can be affected by an inlet duct (13) for the water to be softened and an outlet duct (14) for the softened water, in the volume of said container (11) there being a vat (15) for the containment of brine, in controlled fluidic connection with said cylinder (12),
said softener (10) being **characterized in that** it comprises a hopper-like body (20) installed on said container (11) so as to cover its opening and adapted to convey salt for the brine into said vat (15).

2. The water softener according to claim 1, **characterized in that** said hopper-like body (20) has top and bottom openings (21, 22) and inclined walls (23) adapted to convey the salt into said vat (15).

3. The water softener according to one or more of the preceding claims, **characterized in that** said hopper-like body (20) has a folded edge (24) for coupling to an upper edge (25) of said container (11) by virtue of quick coupling means.

4. The water softener according to one or more of the preceding claims, **characterized in that** said quick-coupling means comprise raised portions that protrude from said folded edge (24) and are adapted to enter with a snap action seats (26) present at said upper edge (25).

5. The water softener according to claim 4, **characterized in that** it comprises a lid (27) adapted to cover said top opening (21) completely.

6. The water softener according to claim 5, **characterized in that** said lid (27) is hinged to said folded edge (24) of said hopper-like body (20).
